# EUROPEAN PATENT APPLICATION

(11) **EP 1 726 429 A2**
(43) Date of publication of application: **29.11.2006**
(21) Application number: 06113926.7
(22) Date of filing: 15.05.2006
(51) Int. Cl.: B29C 47/38, B05C 17/005

(54) **Extruder for welding plastic components**

(30) Priority: 27.05.2005 IT PD20050156
(71) Applicant: RITMO S.p.A., 35037 Teolo (Padova) (IT)
(72) Inventor: Bortoli, Renzo, 35038, Torreglia PD (IT)
(74) Representative: Modiano, Micaela Nadia

(57) **Abstract**

An extruder for welding plastic components, of the type comprising a rear part (12), for feeding and segmenting a continuous plastic filament (13), and a front part (11), for plasticizing and ejecting plastic material to be deposited on the weld. The front part (11) comprises a first chamber (15) for moving the particles (16) of plastic material from the rear part (12) to a second chamber (17) for plasticizing and ejection, which ends with a first nozzle (18) suitable to eject the melted plastic material. The extruder further comprises a duct (33) for heating forced air, which is formed between the outer surface (34) of the external containment enclosure (14) and the walls of the first and second chambers (15, 17); the heating duct (33) ends with a second nozzle (35) for ejecting the heated air, which is arranged proximate to the first nozzle (18). The heated air that exits from the second nozzle (35) is useful for preheating the welding area.

## Description

The present invention relates to an extruder for welding plastic components.

Among the various methods for welding plastic components, such as for example containment tanks and other types of special article, one of the most widely used is welding with deposited material, which is performed by means of an extruder composed of a rear part, for feeding and segmenting a continuous filament made of plastic material to be deposited for welding, and a front part for plasticizing and ejecting the material to be deposited.

The front part for plasticizing and ejection generally comprises a plasticizing chamber, inside which the small segments of plastic filament that arrive from the rear part, moved by means of a screw feeder toward an ejection nozzle, are melted.

An electric resistor for heating and melting the small segments of filament is arranged around the plasticizing chamber.

Said front part also comprises a transfer chamber, inside which a part of the screw feeder is arranged; said transfer chamber, by means of the screw feeder, moves the particles of segmented filament from the rear part toward the plasticizing chamber.

The components of the front part are contained within an external containment enclosure.

The rear part comprises generally a feeding and cutting region for segmenting the continuous plastic filament, for example by way of the movement of a worm screw which is monolithic with said screw feeder.

The rear part also comprises a frame which supports the motor drive that turns the worm screw and the screw feeder which is monolithic therewith; said motor drive is arranged in a machine body on which the grip and support region for the user is formed.

Means for generating a stream of hot air are provided outside said external containment enclosure and said frame and allow to preheat the parts to be welded in order to obtain optimum welding.

Currently, said hot air stream generation means are constituted by particular devices to be fitted to the extruder, such as hot air blowers or the like or devices to be associated externally, such as compressors associated with heat sources which, by means of ducts, convey the external hot air proximate to the melted plastic material ejection nozzle of the extruder.

Solutions are also known which use said hot air stream generation means also to superheat the plasticizing chamber, thus eliminating the electrical resistors.

However, the hot air stream generation means currently described are expensive and affect significantly the final cost of the extruder.

Further, these devices use electric resistors, which lead to a significant overall electric power consumption.

Moreover, these devices lead to inevitable inconvenience in the use of the extruder, since they are heavy and quite bulky.

The aim of the present invention is to provide an extruder for welding components made of plastic material which solves the problems noted in known types.

Within this aim, an object of the present invention is to provide an extruder for welding plastic components which has simplified components with respect to known types, so as to reduce its production costs.

Another object of the present invention is to provide an extruder for welding plastic components which is easier to handle than known types.

Another object of the present invention is to provide an extruder for welding plastic components which has lower operating costs than known types.

Another object of the present invention is to provide an extruder for welding plastic components which can be manufactured with known systems and technologies.

This aim and these and other objects, which will become better apparent hereinafter, are achieved by an extruder for welding plastic components, of the type which comprises a rear part, for feeding and segmenting a continuous plastic filament, and a front part, for plasticizing and ejecting plastic material to be deposited on the weld, said front part comprising a first chamber for moving the particles of plastic material from said rear part to a second chamber for plasticizing and ejection, which ends with a first nozzle suitable to eject the melted plastic material, said first and second chambers containing a screw feeder for moving the particles, said second chamber being surrounded by at least one electrical resistor which is suitable to plasticize the particles of plastic material that arrive from said first chamber, said front part being contained in an external containment enclosure, characterized in that it comprises a duct for heating forced air, which is formed between the outer surface of said external containment enclosure and the walls of said first and second chambers, said heating duct ending with a second nozzle for ejecting the heated air.

Further characteristics and advantages of the invention will become better apparent from the following detailed description of a preferred but not exclusive embodiment thereof, illustrated by way of non-limiting example in the accompanying drawings, wherein:

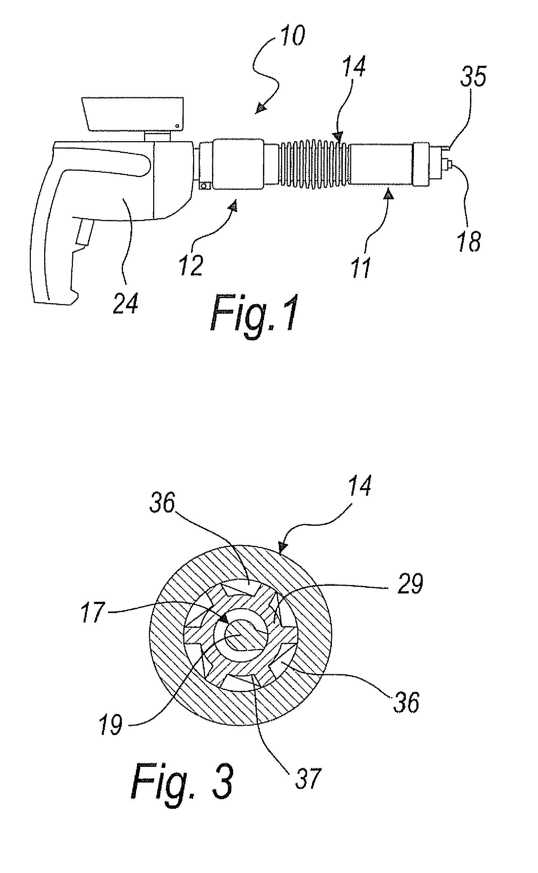

Figure 1 is a side view of an extruder according to the invention;
Figure 2 is a sectional top view of the extrusion portion of the extruder of Figure 1;
Figure 3 is a transverse sectional view of the extruder of Figure 1.

With reference to the figures, an extruder for welding plastic components according to the invention is generally designated by the reference numeral 10.

The extruder 10 comprises a front part 11, for plasticizing and ejecting plastic material to be deposited on the weld, and a rear part 12, for feeding and segmenting a continuous filament, designated herein by the reference numeral 13, which is made of the plastic material to be deposited on the weld.

The front part 11 comprises an external containment enclosure, generally designated by the reference numeral 14, inside which there is a first chamber 15 for transferring small portions of plastic filament, generally designated by the reference numeral 16, from the rear part 12 to a second melting chamber 17, which is located proximate to a first nozzle 18 suitable to eject the melted plastic material.

The first chamber 15 is substantially cylindrical and comprises internally a transfer screw feeder 19, which moves the small portions of filament 16 toward the second chamber 17 and the first nozzle 18.

The second chamber 17 is surrounded, in this embodiment, by an electric resistor 20 of the coiled type, which allows the plastic material to melt inside the chamber 17.

The rear part 12, for feeding and segmenting the continuous filament 13, comprises a feed channel 21, which cooperates with a worm screw 22.

The worm screw 22 is fixed coaxially at the rear end of the transfer screw feeder 19 and is fixed coaxially to a rotation shaft 23, which protrudes from a motor drive, for example an electric motor drive (not designated by reference numerals in the figures for the sake of simplicity), which is incorporated within a frame 24 of the extruder 10; the frame 24 and the motor drive are, for example, the typical ones of an ordinary portable drill.

It is evident that the motor drive can be of any kind, electrical, pneumatic, hydraulic, et cetera, depending on the requirements and on the applications.

The configuration of said rear part and the system for segmenting the continuous plastic filament matches, for example, the one disclosed in US-7,014,447 and EPA-04105322.4, to which reference is made for a more detailed description of its operation.

As regards the overall structure of the rear part 12, it comprises a cylindrical sleeve 25, which forms the rotation chamber of the worm screw 22; the cylindrical sleeve 25 is coaxial to the rotation axis of the rotation shaft 23 of the motor drive.

An axial bearing 26 of the conical roller type is arranged on the bottom of the cylindrical sleeve 25, and the rotary shaft 23 that protrudes from the motor drive is keyed on said bearing.

Since the worm screw 22 is rigidly fixed coaxially at the rear end of the transfer screw feeder 19, and since said screw feeder is fixed coaxially to the rotary shaft 23, the rotation axis of the screw feeder 19 consequently coincides with the axis of the rotary shaft 23 and therefore with the axis of the axial bearing 26 of the conical roller type.

As regards the front part 11, it is contained, as mentioned, in an external containment enclosure 14.

The first chamber 15, for moving the segmented particles of plastic material, is delimited by the internal surface of a tubular jacket 29, which is inserted in the external containment enclosure 14.

The second chamber 17, for melting, is delimited by the internal surface of a bush 31, with which a tubular bushing 32 is associated coaxially; said bushing, together with the bush 31, delimits a cylindrical receptacle for the electrical resistor 20.

The first and second chambers 15 and 17 are coaxial and are crossed by the screw feeder 19; the screw feeder 19 changes its pitch at the second chamber 17.

Advantageously, the extruder 19 comprises a forced air heating duct 33, which is formed between the external surface 34 of the external containment enclosure 14 and the walls of the first and second chambers 15 and 17.

The heating duct 33 ends with a second nozzle 35 for ejecting the heated air.

In this embodiment, the heating duct 33 comprises two separate portions, respectively a first portion 33a, formed substantially around the first chamber 15, and a second portion 33b, which is formed substantially around the second chamber 17.

In particular, in this embodiment, the first portion 33a is constituted by a series of ducts 36 which have a substantially helical shape and are coaxial to the first chamber 15.

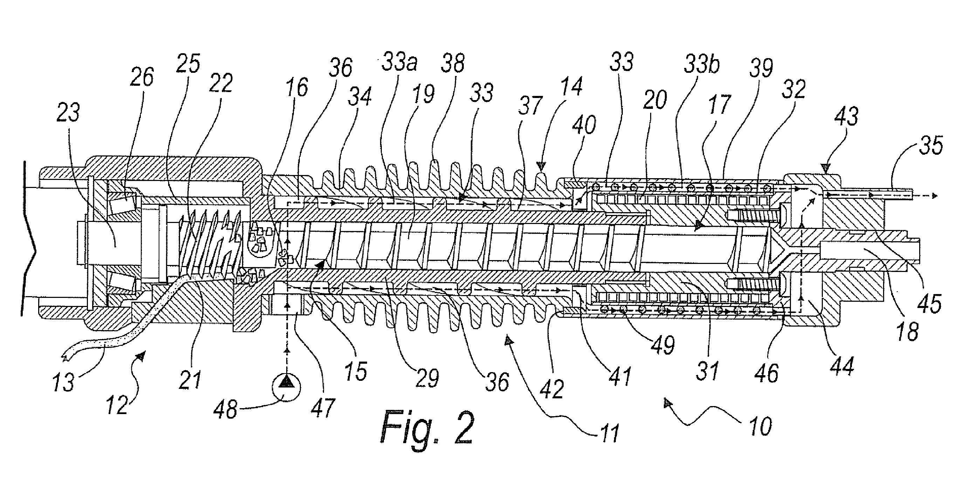

The ducts 36 are constituted by respective channels formed on the external surface 37 of the tubular jacket 29 and closed by the internal surface of the external containment enclosure 14, which overlaps the tubular jacket 29, as shown clearly in Figures 2 and 3.

In practice, the ducts 36 are constituted by a helix with multiple starts; Figure 3 is a transverse sectional view of the first chamber 17, of the tubular jacket 29 and of the external containment enclosure 14, which clearly shows the starts of the helix that forms the ducts 36.

It is evident that this first portion 33a can also be provided according to other embodiments, such as for example a single cylindrical channel or a single helical channel with a single start.

The second portion 33b of the heating duct 33 is delimited by the internal surface of the external containment enclosure 14 and by the external surface of the bushing 32.

In particular, the external containment enclosure 14 comprises a first tubular portion 38, which is provided externally with fins and relates to the first portion 33a of the heating duct 33, and a second tubular portion 39, which relates to the second portion 33b of the heating duct 33.

The first and second tubular portions 38 and 39 are arranged in contact, by means of their ends, with a spacer ring 40, on which there are through holes 41 to allow connection between the first portion 33a and the second portion 33b of the heating duct 33.

The bush 31 is keyed at one end of the tubular jacket 29, and a shoulder 42 for positioning the spacer ring 40 is formed on said end.

The working end of the external containment enclosure 14 is constituted by a cup 43, which forms internally a collection chamber 44 for the air that arrives from the second portion 33b of the heating duct 33.

The second nozzle 35 for ejecting the heated air protrudes from the bottom of the cup 43.

A hole 45 for the passage of the first nozzle 18 is provided centrally with respect to the bottom of the cup 43; said nozzle protrudes from a plate 46 for closing the second chamber 17 formed by the bush 31.

The second nozzle 35 for ejecting the heated air is therefore positioned proximate to the first nozzle 18.

On the first tubular portion 38, at the beginning of one end of the tubular jacket 29, there is an intake 47 for the heating duct 33, which can be connected functionally to air stream generation means, designated schematically in Figure 2 by the reference numeral 48.

The air stream generation means 48 are constituted for example by a compressor or a fan, which are separate from the extruder body and can be connected to the intake 47 by means of a flexible hose (not shown in the figures).

Optionally, the fan or other equivalent means can be fitted also to the body of the extruder.

A convection body 49 is provided on the second portion 33b of the heating duct 33 and is monolithic with, or in simple contact with, the bushing 32, and protrudes from the outer surface of the bushing 32 in order to increase heat exchange between the electrical resistor 20 and the air that flows through the second portion 33b of the heating duct 33.

In particular, in this embodiment, the convection body 29 is constituted by a metallic filament which is wound in a spiral on the bushing 32 and is fixed thereto by its ends.

The operation of the extruder, as regards the part designed for cutting, melting and ejection, is substantially similar to the operation of other known extruders and in particular to the operation of the extruder disclosed in the above cited US-7,014,447 and EPA-04105322.4.

As regards the step for preheating the welding region with hot air, this is performed as follows.

The intake 47 is connected for example to a fan, which forces air into the helical ducts 36 of the first portion 33a of the heating duct 33.

Here, the air undergoes a first heating due to the heat generated in the transfer of the plastic particles 16 by means of the screw feeder 19.

The air then passes through the second portion 33b of the heating duct 33; in this step, the air is heated even further by the presence of the electrical resistor 20.

In order to increase heat exchange by convection, a metallic wire wound in a spiral on the bushing 32 is provided in the second portion 33b; said wire is in fact heated by conduction through the bushing 32, which encloses the electrical resistor 20.

The heated air then flows into the chamber 44 and then exits from the second nozzle 35, which is directed conveniently onto the welding region to be preheated.

In practice it has been found that the invention thus described solves the problems noted in known types of extruder for welding components made of plastic material; in particular, the present invention provides an extruder for welding plastic components which does not require association with accessories which generate hot air to preheat the welding region, since the heat produced by the extruder itself for transferring and plasticizing the melted material is used as a heating source.

This has been achieved by forming inside the extruder itself a heating duct which strikes the hottest regions of the extruder.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2005A000156 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An extruder for welding plastic components, of the type comprising a rear part (12), for feeding and segmenting a continuous plastic filament (13), and a front part (11), for plasticizing and ejecting plastic material to be deposited on the weld, said front part (11) comprising a first chamber (15) for moving the particles (16) of plastic material from said rear part (12) to a second chamber (17) for plasticizing and ejection, which ends with a first nozzle (18) suitable to eject the melted plastic material, said first and second chambers (15, 17) containing a screw feeder (19) for moving the particles (16), said second chamber (17) being surrounded by at least one electrical resistor (20) which is suitable to plasticize the particles (16) of plastic material that arrive from said first chamber (15), said front part (11) being contained in an external containment enclosure (14), **characterized in that** it comprises a duct (33) for heating forced air, which is formed between the outer surface (34) of said external containment enclosure (14) and the walls of said first and second chambers (15, 17), said heating duct (33) ending with a second nozzle (35) for ejecting the heated air.

2. The extruder according to claim 1, **characterized in that** said heating duct (33) comprises two separate portions (33a, 33b), a first portion (33a) which is formed substantially around said first chamber (15) and a second portion (33b) which is formed substantially around said second chamber (17), said first portion (33a) being constituted by at least one at least partially helical duct (36) which is coaxial to said first chamber (15).

3. The extruder according to claim 2, **characterized in that** said first chamber (15) is delimited by the internal surface of a tubular jacket (29), which is inserted in said external containment enclosure (14), said at least one at least partially helical duct (36) being constituted by a channel which is formed on the outer surface (37) of said tubular jacket (29) and is closed by the internal surface of said external containment enclosure (14) which overlaps said tubular jacket (29).

4. The extruder according to claim 2 or 3, **characterized in that** said first portion of the heating duct (33) is constituted by a plurality of at least partially helical ducts (36), which are mutually offset so as to form an at least partially helical shape with multiple starts.

5. The extruder according to claim 2, 3 or 4, **characterized in that** said second chamber (17) is delimited by the internal surface of a bush (31) with which a tubular bushing (32) is associated coaxially, said bushing delimiting, together with said bush (31), a cylindrical receptacle for a spiral electrical resistor (20), said second portion (33b) of the heating duct (33) being delimited by the internal surface of said external containment enclosure (14) and by the external surface of said tubular bush (32).

6. The extruder according to claim 5, **characterized in that** in said second portion (33b) of the heating duct (33) there is at least one convection body (49), which is monolithic with, or in simple contact with, said bushing and protrudes from the external surface of said tubular bushing (32) in order to increase heat exchange between said electrical resistor (20) and the air that flows through said second portion (33b) of the heating duct (33).

7. The extruder according to claim 6, **characterized in that** said at least one convection body (49) is constituted by a metallic wire which is wound in a spiral on said tubular bush (32) and is fixed thereto.

8. The extruder according to claim 7, **characterized in that** said bush (31) is keyed to one end of said tubular jacket (29), a shoulder (42) being provided on said end for positioning a spacer ring (40), through holes (41) being provided on said spacer ring (40) and being suitable to allow the connection between said first portion (33a) and said second portion (33b) of the heating duct (33), said external containment enclosure (14) comprising a first tubular portion (38), which is provided externally with fins and relates to said first portion (33a) of the heating duct (33), and a second tubular portion (39), which relates to said second portion (33b) of the heating duct (33), said first tubular portion (38) and said second tubular portion (39) being arranged in contact, by means of their ends, with said spacer ring (40), the working end of said external containment enclosure (14) being constituted by a cup (43), which forms internally a chamber (44) for collecting the air that arrives from said second duct portion (33b), said second nozzle (35) for ejecting the heated air protruding from the bottom of said cup (43), a hole (45) for the passage of said first nozzle (18) for the ejection of the melted plastic material being provided centrally with respect to the bottom of said cup (43), said nozzle (18) protruding from a plate (46) for closing said second chamber (17) which is formed by said bush (31), an intake (47) being provided on said first tubular portion (38) for said heating duct (33) which can be functionally connected to means for generating an air stream (48).

9. The extruder according to claim 8, **characterized in that** said air stream generation means (48) comprise a compressor or a fan, which are separated from the body of the extruder (10) or are fitted thereon and can both be connected to said intake opening (47) by means of a flexible hose.

10. The extruder according to one or more of the preceding claims, **characterized in that** said second nozzle (35) for ejecting the heated air, with which said heating duct (33) ends, is arranged proximate to said first nozzle (18).
